(19) Europäisches Patentamt
European Patent Office
Office européen des brevets

(11) EP 2 334 892 B1

(12) # EUROPÄISCHE PATENTSCHRIFT

(45) Veröffentlichungstag und Bekanntmachung des Hinweises auf die Patenterteilung:
**22.02.2017 Patentblatt 2017/08**

(21) Anmeldenummer: **09778408.6**

(22) Anmeldetag: **08.09.2009**

(51) Int Cl.:
***E21B 17/042*** *(2006.01)*

(86) Internationale Anmeldenummer:
**PCT/EP2009/006519**

(87) Internationale Veröffentlichungsnummer:
**WO 2010/028809 (18.03.2010 Gazette 2010/11)**

(54) **GEWINDEVERBINDUNG**

THREADED CONNECTION

RACCORDEMENT FILETÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **12.09.2008 DE 102008047060**

(43) Veröffentlichungstag der Anmeldung:
**22.06.2011 Patentblatt 2011/25**

(73) Patentinhaber: **TRACTO-TECHNIK GmbH & Co. KG**
**57356 Lennestadt (DE)**

(72) Erfinder:
- **KOCH, Elmar**
  **59889 Eslohe (DE)**
- **WURM, Dieter**
  **57399 Kirchhundem (DE)**
- **HOMRINGHAUS, Rouwen**
  **57368 Lennestadt (DE)**
- **FISCHER, Sebastian**
  **57368 Lennestadt (DE)**

(74) Vertreter: **Tilmann, Max Wilhelm et al**
**König-Szynka-Tilmann-von Renesse**
**Patentanwälte Partnerschaft mbB**
**Postfach 11 09 46**
**40509 Düsseldorf (DE)**

(56) Entgegenhaltungen:

| | |
|---|---|
| **EP-A1- 0 321 346** | **EP-A1- 0 324 442** |
| **WO-A1-2006/092649** | **DE-A1- 3 840 731** |
| **DE-A1- 19 608 980** | **DE-A1- 19 803 304** |
| **GB-A- 629 837** | **US-A- 4 548 431** |
| **US-A- 5 060 740** | |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 334 892 B1

## Beschreibung

Die Erfindung betrifft eine Gewindeverbindung und insbesondere eine Gewindeverbindung für ein aus Gestängeschüssen bestehendes Gestänges einer Erdarbeitsvorrichtung.

Unter dem Begriff "Erdarbeitsvorrichtung" werden erfindungsgemäß Vorrichtungen verstanden, mit denen eine Antriebsleistung einer Antriebsvorrichtung über ein Gestänge auf eine Werkzeug, das an einem Gestänge angeordnet ist, übertragen werden. Hierunter fallen insbesondere Erdbohrvorrichtungen, mit denen Erdbohrungen und insbesondere Horizontalbohrungen in das Erdreich eingebracht werden. Hierbei werden von der Antriebsvorrichtung in der Regel Schub- oder Druckkräfte und ein Antriebsmoment über das Gestänge der Erdbohrvorrichtung auf das als Bohrkopf ausgebildete Werkzeug übertragen. Es existieren jedoch auch Erdarbeitsvorrichtungen, bei denen lediglich Schub- oder Zugkräfte über das Gestänge auf ein entsprechendes Werkzeug übertragen werden. Hierunter fallen insbesondere solche Erdarbeitsvorrichtungen, mit denen bestehende Bohrungen im Erdreich bzw. bereits verlegte Altleitungen aufgeweitet oder herausgezogen werden und gegebenenfalls gleichzeitig ein Neurohr eingezogen wird. Häufig sind die Erdarbeitsvorrichtungen auch so ausgelegt, dass sie sowohl für das Erstellen der Erdbohrungen als auch für ein ziehendes Arbeiten, d. h. für ein Aufweiten einer bestehenden Bohrung oder einer Altleitung bzw. für das Einziehen eines Neurohrs verwendet werden können. Dies ermöglicht, mit derselben Erdarbeitsvorrichtung zunächst eine Pilotbohrung zu erstellen, wobei ein Pilotbohrkopf schiebend durch das Erdreich vorgetrieben wird, bis dieser eine Zielbaugrube erreicht, und der Pilotbohrkopf in der Zielbaugrube durch einen Aufweitkopf ersetzt wird, wobei die Pilotbohrung beim Zurückziehen des Bohrgestänges aufgeweitet wird. Gegebenenfalls kann gleichzeitig mit dem Aufweitkopf ein an diesen angehängtes Neurohr in die aufgeweitete Erdbohrung eingezogen werden.

Das Gestänge derartiger Erdarbeitsvorrichtungen besteht regelmäßig aus einer Mehrzahl von Gestängeschüssen, die dem Bohrvortrieb entsprechend nach und nach miteinander verbunden werden. Das Verbinden der einzelnen Gestängeschüsse erfolgt über Kupplungselemente, wobei neben Steckkupplungen, wie in DE 196 08 980 beschrieben, insbesondere Schraubverbindungen weit verbreitet sind. Wesentliche Vorteile von Schraubverbindungen sind die geringen Kosten, die mit ihrer Herstellung verbunden sind sowie die Möglichkeit, das Verschrauben auf einfache Weise automatisiert durchführen zu lassen. Ein wesentlicher Nachteil von Schraubverbindungen ist jedoch, dass diese häufig die größten Schwachstellen des Gestänges darstellen, was auf den relativ geringen Durchmesser im Bereich des Gewindesteckers der Gewindeverbindung sowie auf die geometrisch bedingt hohe Kerbwirkung des Gewindes selbst zurückzuführen ist.

Bekannte Gewindearten, die für Gestänge von Erdarbeitsvorrichtungen verwendet werden, sind API-Gewinde sowie Rundgewinde entsprechend der DIN 20 400. Die Lebensdauer derartiger Gewindeformen hat sich jedoch im täglichen Betrieb der Erdarbeitsvorrichtungen als zu gering herausgestellt.

Es wurden daher alternative Gewindeformen entwickelt, die besonders für die bei Erdarbeitsvorrichtungen auftretenden spezifischen Belastungen des Gestänges ausgelegt sind. Die DE 198 03 304 A1 offenbart eine Gewindeverbindung, mit der Gestängeschüsse eines Bohrgestänges verbunden werden sollen, wobei das Bohrgestänge insbesondere zum Drehschlagbohren eingesetzt werden soll. Wesentliche Besonderheiten dieser Gewindeverbindungen sind die asymmetrische Form des Gewindes mit unterschiedlichen Steigungswinkeln der im Drehschlagbohrbetrieb Last-aufnehmenden sowie der nicht-Last-aufnehmenden Flanken sowie das Vorsehen eines gewindelosen Einführabschnitts. Die nicht-Last-aufnehmenden Flanken sollen zudem kreisbogenförmig ausgebildet sein. Auch die aus der DE 198 03 304 A1 bekannte Gewindeverbindung hat sich im täglichen Betrieb als nicht ausreichend robust erwiesen.

Aus der EP 0 324 442 B1 sowie der US-Patentschrift 5,060,740 sind ebenfalls asymmetrische Gewindeverbindungen bekannt, die für die Verwendung zum Verbinden von Gestängeschüssen von Erdbohrvorrichtungen ausgelegt wurden. Die in diesen Druckschriften offenbarten Gewindeverbindungen zeichnen sich dadurch aus, dass der Gewindegrund einen Abschnitt einer Ellipse ausbildet. Hierdurch soll ein möglichst kerbwirkungsfreier Übergang von dem Gewindegrund in die eben ausgebildeten Flanken des Gewindes ermöglicht werden.

Auch aus der WO 2006/092649 A1 sind Gewindeverbindungen für Gestänge von Erdbohrvorrichtungen bekannt, bei denen der Gewindegrund einen Abschnitt einer Ellipse ausbildet. Die in dieser Druckschrift offenbarten Gewindeformen können sowohl asymmetrisch als auch symmetrisch ausgebildet sein.

Keine der aus dem Stand der Technik gekannten Gewindeformen konnte sich bislang durch eine zufriedenstellende Lebensdauer bei einer Verwendung zum Verbinden von Gestängeschüssen eines Gestänges einer Erdarbeitsvorrichtung auszeichnen.

Ausgehend von diesen Stand der Technik lag der Erfindung daher die Aufgabe zugrunde, eine insbesondere hinsichtlich der Lebensdauer verbesserte Gewindeverbindung anzugeben, die eine höhere Lebensdauer insbesondere bei einer Verwendung zum Verbinden von Gestängeschüssen eines Gestänges einer Erdarbeitsvorrichtung aufweist.

Diese Aufgabe wird durch die Gegenstände der unabhängigen Patentansprüche gelöst. Vorteilhafte Ausführungsformen sind Gegenstand der jeweiligen abhängigen Patentansprüche und ergeben sich aus der nachfolgenden Beschreibung der Erfindung.

Der Kern der Erfindung sieht vor, dass Außengewinde eines Gewindesteckers einer Gewindeverbindung, die vorzugsweise zum Verbinden von Gestängeschüssen eines Gestänges einer Erdarbeitsvorrichtung verwendet werden kann, so auszubilden, dass Flanken dieses Außengewindes einen Abschnitt einer Ellipse ausbilden. Erfindungsgemäß können alle oder auch nur ein Teil der Flanken elliptisch ausgebildet sein. Beispielsweise können lediglich die vorderen, zum Gewindeauslauf weisenden Flanken erfindungsgemäß elliptisch ausgebildet sein, die hinteren Flanken dagegen nicht.

Durch die Ausbildung der Flanken in Form eines Abschnitts einer Ellipse wird ein sich stetig ändernder Flankenwinkel erreicht, durch den ein optimierter Kontakt zwischen den Flanken des Gewindesteckers sowie den korrespondierenden Flanken eines Innengewindes einer entsprechenden Gewindebuchse erreicht werden kann. Hierdurch kann eine homogenere Spannungsverteilung erreicht werden, wodurch die Spannungsmaxima weniger im Gewindegrund als im Bereich der Flanken auftreten. Dies wirkt sich positiv auf die Lebensdauer der Gewindeverbindung aus, da in dem Bereich der Flanken regelmäßig keine geometrische Kerbe vorzufinden ist; die Kerbwirkung im Gewindegrund wird dadurch verringert. Bei der erfindungsgemäßen Ausgestaltung des Gewindesteckers bzw. der korrespondierenden Gewindebuchse einer sich hieraus zusammensetzenden Gewindeverbindung kann erreicht werden, dass sich im Kontaktbereich zwischen dem Gewindestecker sowie der Gewindebuchse hauptsächlich Druckspannungen ergeben. Die von den aus dem Stand der Technik bekannten Gewindeformen auftretenden Biegespannungen im Bereich des Gewindegrunds können hierbei zu einem großen Teil vermieden werden. Da Druckspannungen von den für Gestänge von Erdarbeitsvorrichtungen verwendeten Werkstoffen (in der Regel Stahl) besser ertragen werden können als Biegespannungen, hat die erfindungsgemäße Gewindeform einen äußerst positiven Einfluss auf die Lebensdauer der Gewindeverbindungen.

In einer bevorzugten Ausführungsform der Erfindung bilden die Flanken des Gewindesteckers einen Abschnitt einer stehenden Ellipse aus. Bei einem korrespondierenden Innengewinde einer Gewindebuchse einer erfindungsgemäßen Gewindeverbindung können die Flanken ebenfalls einen Abschnitt einer stehenden Ellipse ausbilden.

Unter "stehender Ellipse" wird erfindungsgemäß eine Ellipse verstanden, deren Hauptachse (d.h. die längere der Mittelachsen) einen größeren Winkel mit der Mittelachse des Gewindesteckers bzw. der Gewindebuchse einschließt, als deren Nebenachse (d.h. die kürzere Mittelachse). Der Winkel zwischen der Hauptachse der Ellipse sowie der Mittelachse des Gewindesteckers bzw. der Gewindebuchse beträgt vorzugsweise bei einer stehenden Ellipse zwischen 70 und 110° und besonders bevorzugt 90°, wobei sich Abweichungen hierzu durch einen Konuswinkel des Gewindesteckers bzw. der Gewindebuchse ergeben können.

Durch die bevorzugte Ausführungsform der Flanken als Abschnitt einer stehenden Ellipse werden besonders steile Gewindeflanken, d.h. besonders große Flankenwinkel erreicht, was insbesondere eine geringere Spreizwirkung der Gewindedose beim Verschrauben der Gewindeverbindung bewirkt.

Um die Gewindeverbindung gleichermaßen für Druck- als auch Zugbelastungen auszulegen, kann weiterhin vorgesehen sein, das Außengewinde des Gewindesteckers und gegebenenfalls das Innengewinde der Gewindebuchse der erfindungsgemäßen Gewindeverbindung symmetrisch auszubilden.

Dies kann besonders bevorzugt dadurch erreicht werden, dass benachbarte Flanken eines Gewindegangs des Gewindesteckers Abschnitte derselben Ellipse ausbilden. Die elliptische Form dieser einen Ellipse kann zudem auch auf den Gewindegrund weiter ausgedehnt werden, so dass beide Flanken und der Gewindegrund eines Gewindegangs ein und dieselbe Ellipse ausbilden. Eine solche Ausbildung des Außengewindes des Gewindesteckers kann eine besonders gleichmäßige Spannungsverteilung sowohl bei einer Druck- als auch bei einer Zugbelastung aufweisen.

Bei einem hierzu korrespondierenden Innengewinde der Gewindebuchsen einer erfindungsgemäßen Gewindeverbindung kann vorgesehen sein, dass die beiden Flanken eines Gewindeprofils Abschnitte ein und derselben Ellipse ausbilden. Vorzugsweise ist hierbei jedoch die Gewindespitze abgeflacht ausgebildet.

In einer weiterhin bevorzugten Ausführungsform der vorliegenden Erfindung bildet der Gewindegrund des Innengewindes der Gewindebuchse zudem einen Abschnitt einer liegenden Ellipse aus. Hierdurch kann die Spannungsverteilung im Gewindegrund des Innengewindes der Gewindebuchse weiterhin verbessert werden.

Um ein einfaches und schnelles Verschrauben des Gewindesteckers mit der Gewindebuchse der erfindungsgemäßen Gewindeverbindung zu ermöglichen, kann vorgesehen sein, dass das Außengewinde des Gewindesteckers und gegebenenfalls auch das Innengewinde der Gewindebuchse konisch ausgebildet sind, d.h. die Gewindegründe und/oder die Gewindespitzen des Gewindesteckers bzw. der Gewindebuchse definieren einen Mantel, der eine konische Form aufweist. Vorzugsweise beträgt der Konuswinkel hierbei zwischen 3° und 5°. Als Konuswinkel wird erfindungsgemäß der Winkel verstanden, der von dem Mantel mit einer Parallelen zu der Längsachse des Gewindesteckers bzw. der Gewindebuchse eingeschlossen wird.

Vorzugsweise sind die Flanken des Außengewindes des Gewindesteckers bzw. des Innengewindes der Gewindebuchse so ausgelegt, dass die durch diese definierten Ellipsen senkrecht zu dem Mantel angeordnet sind.

Die Gewindespitzen des Außengewindes des Gewindesteckers und/oder des Innengewindes der Gewindebuchse sind weiterhin bevorzugt abgerundet ausgebildet. Dies kann ein- oder beidseitig im Übergang zu den Gewindeflanken vorgesehen sein.

Weiterhin bevorzugt beträgt die Gewindesteigung zwischen 5 mm und 9 mm und besonders bevorzugt 7 mm.

Diese relativ große Gewindesteigung vereinfacht ein Verschrauben des Gewindesteckers mit der Gewindebuchse. In Abhängigkeit von dem Gewindedurchmesser kann selbstverständlich auch eine größere oder kleinere Gewindesteigung sinnvoll sein. Eine Gewindesteigung von ca. 7 mm kann beispielsweise vorteilhaft in Kombination mit einem Flankendurchmesser des Gewindes von 65 mm (bei einem konischen Gewinde: als größter Durchmesser) verwendet werdet werden.

Weiterhin bevorzugt sollte der Anschnittwinkel relativ flach gewählt werden, um Risse, die vom Anschnitt ausgehen, zu vermeiden. Als Vorteilhaft hat sich ein Anschnittwinkel im Bereich von 20° bis 30° herausgestellt, wobei je nach Auslegung der übrigen Maße der Gewindeverbindung auch kleinere oder größere Anschnittwinkel sinnvoll sein können. Das Anschnittmaß des Gewindesteckers sollte vorzugsweise mindestens 0,5 mm betragen, das der Gewindebuchsen vorzugsweise mindestens 1 mm.

Weiterhin sollte die Differenz zwischen dem Längenmaß des Gewindesteckers und der Gewindebuchse höchstens 0,5 mm betragen. Dieses Maß kann wichtig für die Anlage von je einer Stirnfläche des Gewindesteckers und der Gewindebuchse aneinander sein, die der Übertragung von Druck und Impulskräften dient, um hierbei das Gewinde selbst zu entlasten. Weiterhin kann dieses Maß ebenfalls für die Dichtigkeit der Gewindeverbindung wichtig sein, was insbesondere für deren Verwendung zum Verbinden von Gestängeschüssen einer Erdarbeitsvorrichtung wesentlich ist.

Der Stirnflächenwinkel, d.h. der Winkel, den die als Anschlagflächen dienenden Stirnflächen des Gewindesteckers und der Gewindebuchse mit der Längsachse der Gewindeverbindung einschließen, kann vorzugsweise 60° bis 80° und besonders bevorzugt 70° betragen.

Die erfindungsgemäße Gewindeverbindung eignet sich besonders für eine Verwendung zum Verbinden von Gestängeschüssen eines Gestänge einer Erdarbeitsvorrichtung, und insbesondere einer auf Druck-, Zug und Stoß belasteten Erdbohrvorrichtung, wie beispielsweise einer horizontalen Bohrvorrichtung, die auch zum Einziehen von Neurohren bzw. zum Aufweiten von Pilotbohren eingesetzt werden kann. Vorzugsweise werden die einzelnen Gestängeschüsse hierzu an einem Ende mit einem erfindungsgemäßen Gewindestecker und an dem anderen Ende mit einer korrespondierenden Gewindebuchse versehen.

Die Erfindung wird nachfolgend anhand eines in den Zeichnungen dargestellten Ausführungsbeispiels näher erläutert.

In den Zeichnungen zeigt:

- Fig. 1 einen Teilschnitt durch einen erfindungsgemäßen Gewindestecker in einer ersten Ausführungsform;
- Fig. 2 einen vergrößerten Ausschnitt aus der Figur 1, in den zusätzliche geometrische Daten eingezeichnet sind;
- Fig. 3 eine zu dem Gewindestecker der Figur 1 korrespondierende Gewindebuchse;
- Fig. 4 einen vergrößerten Ausschnitt aus der Figur 3, mit der Angabe weiterer geometrischer Daten;
- Fig. 5 einen Teilschnitt durch einen erfindungsgemäßen Gewindestecker in einer zweiten Ausführungsform;
- Fig. 6 einen Teilschnitt durch eine zu dem Gewindestecker der Figur 5 korrespondierende Gewindebuchse;
- Fig. 7 den Gewindestecker der Figur 5 sowie die Gewindebuchse der Figur 6 im Verbund;
- Fig. 8 eine Darstellung geometrischer Zusammenhänge bei der Berechnung von Geometriedaten von Ellipsen;
- Fig. 9 das grafische Ergebnis der Berechnung von geometrischen Daten einer konkreten Gewindeform;
- Fig. 10 die grafische Darstellung des Flankenwinkels dieser Gewindeform;
- Fig. 11 die grafische Darstellung der Krümmung der Ellipse dieser Gewindeform;
- Fig. 12a eine FEM-Simulation zu einer erfindungsgemäßen Gewindeverbindung;
- Fig. 12b eine FEM-Simulation zu einem Gewinde gemäß der API-Norm und
- Fig. 12c eine FEM-Simulation zu einer Twin-Drive-Gewindeverbindung.

In den Figuren 1 bis 4 ist eine erfindungsgemäße Gewindeverbindung in einer ersten Ausführungsform dargestellt. Der erfindungsgemäße Gewindestecker (Figur 1) dieser Gewindeverbindung ist als Außengewinde endseitig auf einem hohlen Gestängeschuss 1 eines Gestänges einer Erdarbeitsvorrichtung ausgebildet. Das Außengewinde des Gewindesteckers ist als konisches Gewinde ausgebildet, d.h., die Verlängerung des durch die einzelnen Gewindegründe definierten Mantels schneidet die Längsachse des Gewindesteckers unter einem Winkel (Z), der vorzugsweise zwischen 3° und 5° beträgt. Das korrespondierend ausgebildete Innengewinde der Gewindebuchse (Figur 3) weist einen entsprechenden Konuswinkel (Z) auf.

Wie sich insbesondere aus der Figur 2 ergibt, sind beide Flanken sowie der Gewindegrund eines Gewindegangs als Abschnitte ein und derselben Ellipse ausgebildet. Die Gewindespitzen sind beidseitig mit einem Radius (R) abgerundet. Die Steigung des Gewindes ergibt sich aus dem Abstand zwischen zwei benachbarten Gewindeprofilen bzw. Gewindegründen und vorliegend als das Doppel der Länge (b) der kleinen Halbachse (Nebenachse) der Ellipse. Die Länge der großen Halbachse der Ellipse (Hauptachse) ist mit (a) bemaßt.

Die Gewindeform der korrespondierenden Gewindebuchse ergibt sich im einzelnen aus der Figur 4. Darin ist zu erkennen, dass das Gewindeprofil, einschließlich beider Gewindeflanken sowie der Gewindespitze, einen Abschnitt einer einzigen Ellipse ausbilden. Korrespondierend zu der Gewindeform des Gewindesteckers sind die Gewindegründe bei der Gewindebuchse der Figuren 3 und 4 wiederum mit dem Radius (R) abgerundet. Die Hauptachsen beider Ellipsen (des Gewindesteckers sowie der Gewindebuchse) sind jeweils senkrecht zu dem durch die Gewindegründe definierten Mantel ausgerichtet.

Die Gewindetiefe (t) bestimmt den geometrischen Ort der Ellipse in Bezug zu dem Mantel. Die Steigung des Gewindes richtet sich nach der Länge der Nebenachsen der Ellipsen und liegt im vorliegenden Fall bei ca. 7 mm.

Sowohl der Gewindestecker der Figur 1 als auch die Gewindebuchse der Figur 3 weisen einen Anschnitt auf. Der Anschnitt des Gewindesteckers wird durch das Anschnittmaß (X) sowie den Anschnittwinkel (Y) definiert. Der Anschnitt der Gewindebuchse wird durch das Anschnittmaß (A) der Gewindebuchse und durch den zum Anschnittwinkel (X) des Gewindesteckers identischen Anschnittwinkel (Y) definiert. Das Anschnittmaß (X) sollte mindestens 0,5 mm betragen und das Anschnittmaß (A) mindestens 1 mm.

Mit (B) ist das Längenmaß der Gewindebuchse bezeichnet. Das Längenmaß des Gewindesteckers ist mit (W) bezeichnet. Beide Maße sind entscheidend für die Qualität der Anlage der Stirnflächen nach dem Aufbringen des Vorspannmoments. Der Toleranzwert zwischen den beiden Stirnflächen sollte im vorliegenden Fall 0,5 mm nicht überschreiten, da dieses Maß ebenfalls für die Dichtigkeit der Verbindung erheblich ist. Die Stirnflächen des Gewindesteckers sowie die korrespondierende Stirnfläche der Gewindebuchse sind im vorliegenden Fall schräg ausgebildet. Ihre Verlängerung schneidet die Längsachse jeweils unter einem Winkel (V) von ca. 70°.

In den Figuren 5 bis 7 ist eine erfindungsgemäße Gewindeverbindung in einer zweiten Ausführungsform dargestellt. Als Besonderheit dieser Gewindeverbindung ist vorgesehen, dass die Gewindegründe der Gewindebuchse zusätzlich ebenfalls einen Abschnitt einer diesmal liegenden Ellipse ausbilden. Hierdurch kann die Verteilung der bei dem Innengewinde der Gewindebuchse auftretenden Spannungen weiter verbessert werden. Es zeigt sich, dass bei der dargestellten Gewindeverbindung die abgeflacht ausgebildeten Gewindespitzen des Gewindesteckers im verschraubten Zustand keinen direkten Kontakt mit den Gewindegründen der Gewindebuchse haben.

Nachfolgend wird exemplarisch die Berechnung des Flankenwinkels sowie der Ellipsenkrümmung einer erfindungsgemäßen Gewindeverbindung durchgeführt. Die geometrischen Abhängigkeiten hierfür ergeben sich aus der Darstellung in der Figur 8.

Geometriedaten Ellipse: Gewindetiefe: t :=2

a :=8 b :=4

Das Ende der Zählschleife wird durch die Gewindetiefe t bestimmt:

$$\text{anfang} := 0 \qquad \text{ende} := \left[\left(\frac{b}{a}\right)\cdot\sqrt{a^2-(a-t)^2}\right] \qquad \text{ende} = 2.646 \qquad \text{faktor} := 0.02$$

Berechnung der Y - Koordinate auf Basis der Geometriedaten:

```
y := | ind ← 0
     | for i ∈ anfang, anfang + faktor .. ende
     |     | y_ind ← i
     |     | ind ← ind + 1
     | y^T
```

Geometriedaten Ellipse: Gewindetiefe: t :=2

a := 8 b :=4

Das Ende der Zählschleife wird durch die Gewindetiefe t bestimmt:

$$\text{anfang} := 0 \qquad \text{ende} := \left[\left(\frac{b}{a}\right)\cdot\sqrt{a^2-(a-t)^2}\right] \qquad \text{ende} = 2.646 \qquad \text{faktor} := 0.02$$

Berechnung der Y - Koordinate auf Basis der Geometriedaten:

$$y := \left| \begin{array}{l} ind \leftarrow 0 \\ \text{for } i \in anfang, anfang + faktor .. ende \\ \quad \left| \begin{array}{l} y_{ind} \leftarrow i \\ ind \leftarrow ind + 1 \end{array} \right. \\ y^T \end{array} \right.$$

**Y =**

| | 0 | 1 | 2 | 3 | 4 | 5 | 6 | 7 | 8 | 9 | 10 |
|---|---|---|---|---|---|---|---|---|---|---|---|
| 0 | 0 | 0,02 | 0,04 | 0,06 | 0,08 | 0,1 | 0,12 | 0,14 | 0,16 | 0,18 | 0,2 |

Berechnung der zugehörigen X - Koordinate mit Hilfe der Formel für Ellipsen nach Bartsch, Taschenbuch der mathematischen Formeln, Kap.6.6.3.1:

$$x := \left| \begin{array}{l} ind \leftarrow 0 \\ \text{for } i \in 0 .. \text{länge}\left(y^T\right) - 1 \\ \quad \left| \begin{array}{l} x_{0,i} \leftarrow \sqrt{a^2 \cdot \left[ 1 - \frac{\left(y_{0,i}\right)^2}{b^2} \right]} \\ ind \leftarrow ind + 1 \end{array} \right. \\ x \end{array} \right.$$

Berechnung der zugehörigen X - Koordinate mit Hilfe der Formel für Ellipsen nach Bartsch, Taschenbuch der mathematischen Formeln, Kap.6.6.3.1:

$$x := \left| \begin{array}{l} ind \leftarrow 0 \\ \text{for } i \in 0 .. \text{länge}\left(y^T\right) - 1 \\ \quad \left| \begin{array}{l} x_{0,i} \leftarrow \sqrt{a^2 \cdot \left[ 1 - \frac{\left(y_{0,i}\right)^2}{b^2} \right]} \\ ind \leftarrow ind + 1 \end{array} \right. \\ x \end{array} \right.$$

**X=**

| | 0 | 1 | 2 | 3 | 4 | 5 | 6 |
|---|---|---|---|---|---|---|---|
| 0 | 8 | 7,9999 | 7,9996 | 7,9991 | 7,9984 | 7,9975 | 7,9964 |

Das Ergebnis dieser Berechnung ist in der Figur 9 dargestellt.

Berechnung der Tangentensteigung:

$$m_t := \left| \begin{array}{l} ind \leftarrow 0 \\ ind2 \leftarrow 1 \\ \text{for } i \in 0..\, länge\left(y^T\right) - 2 \\ \quad \left| \begin{array}{l} m_{t_{0,i}} \leftarrow \dfrac{(-b)^2 \cdot x_{0,ind2}}{a^2 \cdot y_{0,ind2}} \\ ind \leftarrow ind + 1 \\ ind2 \leftarrow ind2 + 1 \end{array} \right. \\ m_t \end{array} \right.$$

| 7 | 8 | 9 | 10 |
|---|---|---|---|
| 12,5 | 11,1 | 10 | 9,1 |

Berechnung des Flankenwinkels:

$$\alpha_t := \left| \begin{array}{l} ind \leftarrow 0 \\ \text{for } j \in 0..\, länge\left((y)^T\right) - 2 \\ \quad \alpha_{t_{0,j}} \leftarrow atan\left(m_{t_{0,j}}\right) \\ \alpha_t \end{array} \right.$$

$\alpha_t =$

| | 0 | 1 | 2 | 3 | 4 | 5 | 6 | 7 | 8 | 9 |
|---|---|---|---|---|---|---|---|---|---|---|
| 0 | 89,4° | 88,9° | 88,3° | 87,7° | 87,1° | 86,6° | 86,0° | 85,4° | 84,9° | 84,3° |

Das Ergebnis dieser Berechnung ist in der Figur 10 dargestellt.

Krümmung der Ellipse:

$$\rho := \left| \begin{array}{l} ind \leftarrow 0 \\ \text{for } k \in 0..\, länge\left(x^T\right) - 1 \\ \quad \left| \begin{array}{l} \rho_{0,ind} \leftarrow \dfrac{1}{a^4 \cdot b^4} \cdot \sqrt{\left[a^4 \cdot \left(\overrightarrow{y^2}\right)_{0,k} + b^4 \cdot \left(\overrightarrow{x^2}\right)_{0,k}\right]^3} \\ ind \leftarrow ind + 1 \end{array} \right. \\ \rho \end{array} \right.$$

$\rho =$

| | 0 | 1 | 2 | 3 | 4 | 5 | 6 | 7 | 8 |
|---|---|---|---|---|---|---|---|---|---|
| 0 | 2 | 2 | 2,001 | 2,002 | 2,004 | 2,006 | 2,008 | 2,011 | 2,014 |

Das Ergebnis dieser Berechnung ist in der Figur 11 dargestellt.

In den Figuren 12a bis 12c sind die Ergebnisse von FEM-Simulationen zu einer erfindungsgemäßen Gewindeverbindung (Figur 12a) sowie zwei Vergleichsgewindeverbindungen, die aus dem Stand der Technik bekannt sind, dargestellt. Figur 12b zeigt dabei ein Gewinde gemäß der API-Norm und Figur 12c eine sogenannte Twin-Drive-Gewindeverbindung, deren konkrete Ausbildung Gegenstand der einleitend erwähnten DE 198 03 304 A1 ist. Die drei FEM-Simulationen sind mit dem gleichen Werkstoffmodell berechnet worden (20MnV6, mit bilinearer kinematischer Verfestigung; E-Modul: 210.000 MPa; Tangentenmodul: 1676 MPa; Streckgrenze: 450 MPa; Zugfestigkeit: 640 MPa; Querkontraktionszahl: 0,28).

Es zeigt sich, dass die Twin-Drive-Gewindeverbindung ein im Vergleich zu der erfindungsgemäßen Gewindeverbindung insgesamt um ca. 30% höheres Spannungsniveau aufweist. Bei dieser Gewindeverbindung liegt zwar ein ähnlicher Kontakt vor, wie bei der in der Figur 12a dargestellten erfindungsgemäßen Gewindeverbindung, jedoch ist dabei die Kontaktstelle nicht so stark lokal eingegrenzt, sondern erstreckt sich über einen größeren Bereich, was sich auch in der Spannungsverteilung in einem "Spannungsberg" niederschlägt.

## Patentansprüche

1. Gewindestecker für eine Gewindeverbindung mit einem auf einem Kern aufgebrachten Außengewinde, **dadurch gekennzeichnet, dass** mindestens eine Flanke des Außengewindes einen Abschnitt einer Ellipse ausbilden.

2. Gewindestecker gemäß Anspruch 1, **dadurch gekennzeichnet, dass** die Flanken einen Abschnitt einer stehenden Ellipse ausbilden.

3. Gewindestecker gemäß Anspruch 1 oder 2, **dadurch gekennzeichnet, dass** das Außengewinde symmetrisch ausgebildet ist.

4. Gewindestecker gemäß einem der vorhergehenden Ansprüche, **dadurch gekennzeichnet, dass** benachbarte Flanken eines Gewindegangs Abschnitte derselben Ellipse ausbilden.

5. Gewindestecker gemäß Anspruch 4, **dadurch gekennzeichnet, dass** auch der Gewindegrund einen Abschnitt dieser Ellipse ausbildet.

6. Gewindestecker gemäß einem der vorhergehenden Ansprüche, **dadurch gekennzeichnet, dass** das Außengewinde konisch ausgebildet ist.

7. Gewindestecker gemäß Anspruch 6, **dadurch gekennzeichnet, dass** der Konuswinkel zwischen 3° und 5° beträgt.

8. Gewindestecker gemäß Anspruch 6 oder 7, **dadurch gekennzeichnet, dass** eine der Mittelachsen der Ellipse senkrecht zu dem durch den Konuswinkel definierten Mantel des Kerns angeordnet ist.

9. Gewindestecker gemäß einem der vorhergehenden Ansprüche, **dadurch gekennzeichnet, dass** die Gewindespitzen ein- oder beidseitig abgerundet ausgebildet sind.

10. Gewindestecker gemäß einem der vorhergehenden Ansprüche, **dadurch gekennzeichnet, dass** die Gewindesteigung zwischen 5 mm und 9 mm, vorzugsweise 7 mm beträgt.

11. Gewindestecker gemäß einem der vorhergehenden Ansprüche, **dadurch gekennzeichnet, dass** der Anschnittwinkel zwischen 20° und 30° beträgt.

12. Gewindestecker gemäß einem der vorhergehenden Ansprüche, **dadurch gekennzeichnet, dass** das Anschnittmaß des Gewindesteckers mindestens 0,5 mm beträgt.

13. Gewindeverbindung mit einem Gewindestecker gemäß einem der vorhergehenden Ansprüche und einer Gewindebuchse mit einem zu dem Außengewinde des Gewindesteckers korrespondierenden Innengewinde.

14. Gewindeverbindung gemäß Anspruch 13, **dadurch gekennzeichnet, dass** der Gewindegrund des Innengewindes einen Abschnitt einer liegenden Ellipse ausbildet.

15. Gewindeverbindung gemäß Anspruch 13 oder 14, **dadurch gekennzeichnet, dass** das Anschnittmaß der Gewindebuchse mindestens 1 mm beträgt.

16. Gewindeverbindung gemäß einem der Ansprüche 13 bis 15, **dadurch gekennzeichnet, dass** die Differenz zwischen dem Längenmaß des Gewindesteckers und der Gewindebuchse höchsten 0,5 mm beträgt.

**17.** Gewindeverbindung gemäß einem der Ansprüche 13 bis 16, **dadurch gekennzeichnet, dass** der Stirnflächenwinkel der Stirnflächen des Gewindesteckers und der Gewindebuchse 70° beträgt.

**18.** Gewindebuchse einer Gewindeverbindung gemäß einem der Ansprüche 13 bis 17.

**19.** Verwendung einer Gewindeverbindung gemäß einem der Ansprüche 13 bis 17 zum Verbinden von Gestängeschüssen (1) eines Gestänges einer Erdarbeitsvorrichtung, insbesondere einer auf Druck, Zug und Stoß belasteten Erdbohrvorrichtung.

## Claims

**1.** Threaded plug for a threaded connection, comprising an exterior thread applied on a core, **characterized in that** at least one flank of the exterior thread forms a segment of an ellipse.

**2.** Threaded plug according to claim 1, **characterized in that** the flanks form a segment of a vertical ellipse.

**3.** Threaded plug according to claim 1 or 2, **characterized in that** the exterior thread is constructed symmetrically.

**4.** Threaded plug according to one of the above claims, **characterized in that** adjacent flanks of a turn form segments of the same ellipse.

**5.** Threaded plug according to claim 4, **characterized in that** the root of the thread also forms a segment of this ellipse.

**6.** Threaded plug according to one of the above claims, **characterized in that** the exterior thread is formed as a cone.

**7.** Threaded plug according to claim 6, **characterized in that** the cone angle is between 3° and 5°.

**8.** Threaded plug according to claim 6 or 7, **characterized in that** a center axis of the ellipse is oriented perpendicularly to the envelope of the core defined by the cone angle.

**9.** Threaded plug according to one of the above claims, **characterized in that** the crests of the thread are rounded on one side or on both sides.

**10.** Threaded plug according to one of the above claims, **characterized in that** the pitch of the thread is between 5 mm and 9 mm, preferably 7 mm.

**11.** Threaded plug according to one of the above claims, **characterized in that** the chamfer angle of the exterior thread is between 20° and 30°.

**12.** Threaded plug according to one of the above claims, **characterized in that** the chamfer dimension of the threaded plug is at least 0.5 mm.

**13.** Threaded connection with a threaded plug according to one of the above claims and a threaded bushing with an interior thread corresponding to the exterior thread of the threaded plug.

**14.** Threaded connection according to claim 13, **characterized in that** the root of the interior thread forms a segment of a horizontal ellipse.

**15.** Threaded connection according to claim 13 or 14, **characterized in that** the chamfer dimension of the threaded bushing is at least 1 mm.

**16.** Threaded connection according to one of claims 13 to 15, **characterized in that** the difference between the longitudinal dimension of the threaded plug and the threaded bushing is at most 0.5 mm.

**17.** Threaded connection according to one of claims 13 to 16, **characterized in that** the end face angle of end faces of the threaded plug and the threaded bushing is 70°.

**18.** Threaded bushing of a threaded connection according to one of claims 13 to 17.

**19.** Use of a threaded connection according to one of claims 13 to 17 for connecting rod sections (1) of a rod assembly of an earth-moving , in particular, ground-drilling machine stressed by pressure, tension and percussion.

**Revendications**

**1.** Elément fileté mâle pour une liaison filetée, comportant un filetage extérieur appliqué sur un noyau, **caractérisé en ce qu'**au moins un flanc du filetage extérieur forme une section d'une ellipse.

**2.** Elément fileté mâle selon la revendication 1, **caractérisé en ce que** les flancs forment une section d'une ellipse verticale.

**3.** Elément fileté mâle selon la revendication 1 ou la revendication 2, **caractérisé en ce que** le filetage extérieur est réalisé symétriquement.

**4.** Elément fileté mâle selon l'une des revendications précédentes, **caractérisé en ce que** des flancs adjacents d'un pas de filetage forment des sections de la même ellipse.

**5.** Elément fileté mâle selon la revendication 4, **caractérisé en ce que** le fond de filet forme aussi une section de cette ellipse.

**6.** Elément fileté mâle selon l'une des revendications précédentes, **caractérisé en ce que** le filetage extérieur est de forme conique.

**7.** Elément fileté mâle selon la revendication 6, **caractérisé en ce que** l'angle de cône est compris entre 3° et 5°.

**8.** Elément fileté mâle selon la revendication 6 ou la revendication 7, **caractérisé en ce qu'**un des axes médians de l'ellipse est disposé perpendiculairement à l'enveloppe du noyau définie par l'angle de cône.

**9.** Elément fileté mâle selon l'une des revendications précédentes, **caractérisé en ce que** les sommets du filet ont une forme arrondie d'un ou des deux côtés.

**10.** Elément fileté mâle selon l'une des revendications précédentes, **caractérisé en ce que** le pas de filetage est compris entre 5 mm et 9 mm, de préférence égal à 7 mm.

**11.** Elément fileté mâle selon l'une des revendications précédentes, **caractérisé en ce que** l'angle d'attaque est compris entre 20° et 30°.

**12.** Elément fileté mâle selon l'une des revendications précédentes, **caractérisé en ce que** la mesure d'attaque de l'élément fileté mâle est d'au moins 0,5 mm.

**13.** Liaison filetée comprenant un élément fileté mâle selon l'une des revendications précédentes et un élément fileté femelle comportant un filetage intérieur correspondant au filetage extérieur de l'élément fileté mâle.

**14.** Liaison filetée selon la revendication 13, **caractérisé en ce que** le fond de filet du filetage intérieur forme une section d'une ellipse horizontale.

**15.** Liaison filetée selon la revendication 13 ou la revendication 14, **caractérisé en ce que** la mesure d'attaque de l'élément fileté femelle est d'au moins 1 mm.

**16.** Liaison filetée selon l'une des revendications 13 à 15, **caractérisé en ce que** la différence entre la mesure de longueur de l'élément fileté mâle et de l'élément fileté femelle est au maximum de 0,5 mm.

**17.** Liaison filetée selon l'une des revendications 13 à 16, **caractérisé en ce que** l'angle de face frontale des faces frontales de l'élément fileté mâle et de l'élément fileté femelle est de 70°.

**18.** Elément fileté femelle d'une liaison filetée selon l'une des revendications 13 à 17.

**19.** Utilisation d'une liaison filetée selon l'une des revendications 13 à 17 pour relier des tronçons de tige (1) d'une tige d'un dispositif de terrassement, en particulier d'un dispositif de forage sollicité en pression, en traction et par des chocs.

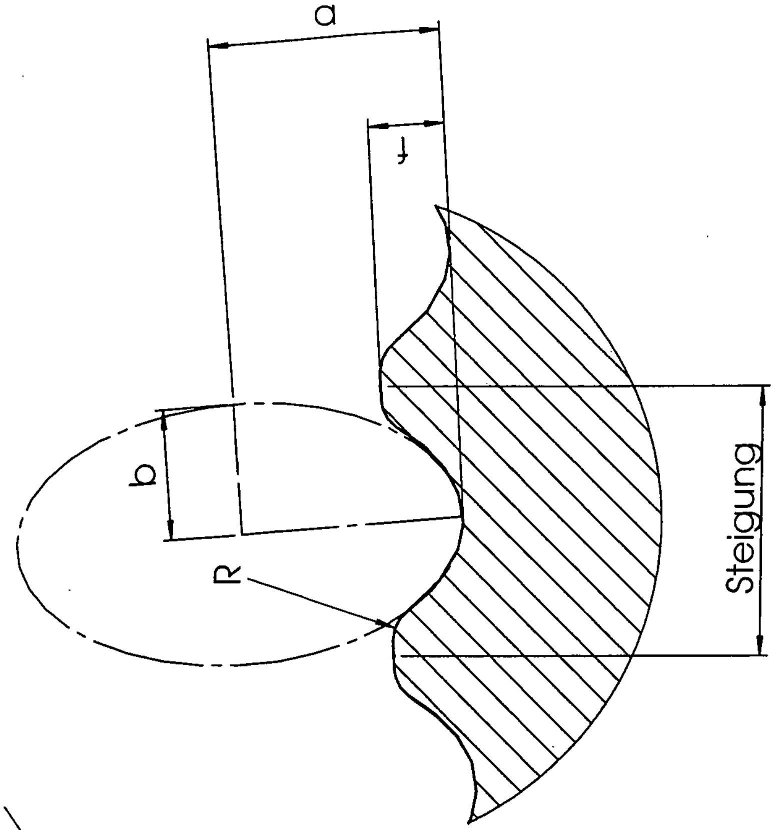


Fig.2

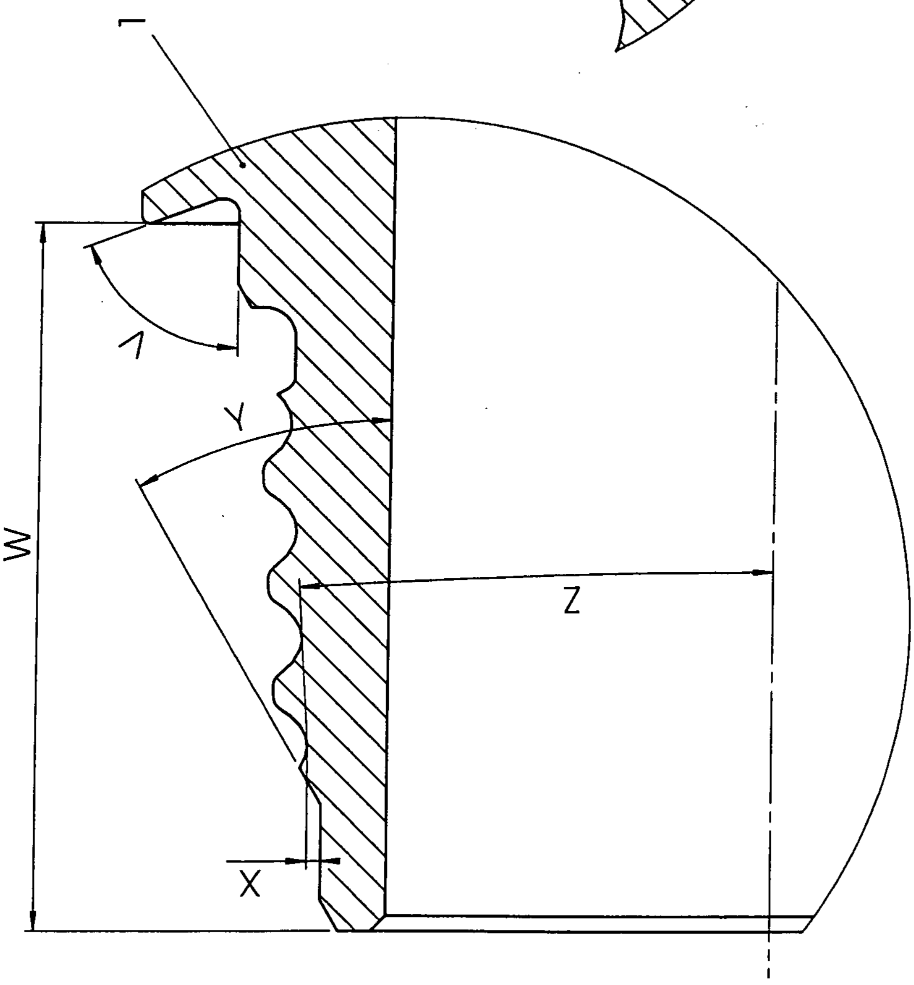


Fig.1

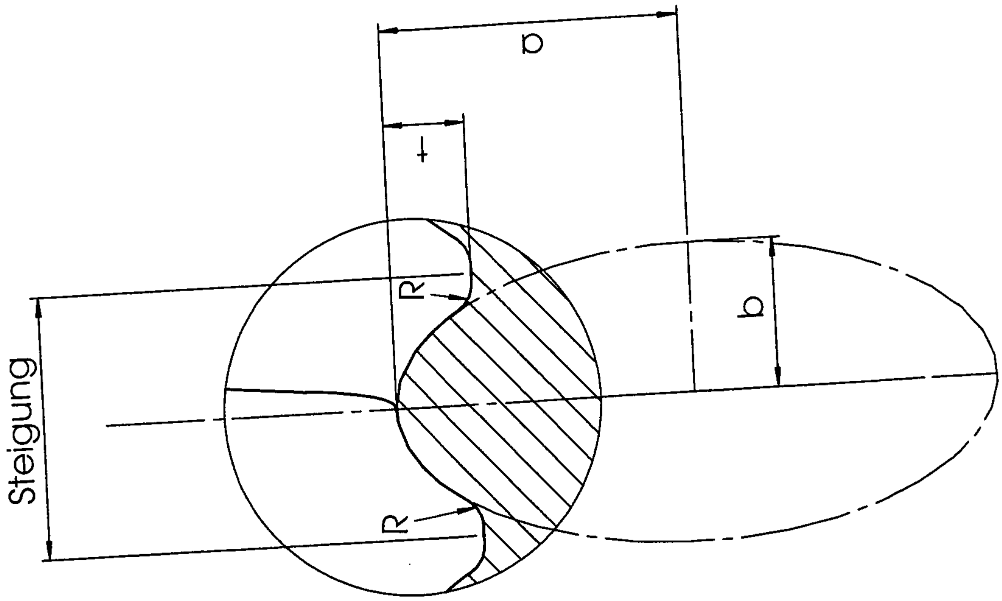


Fig.4

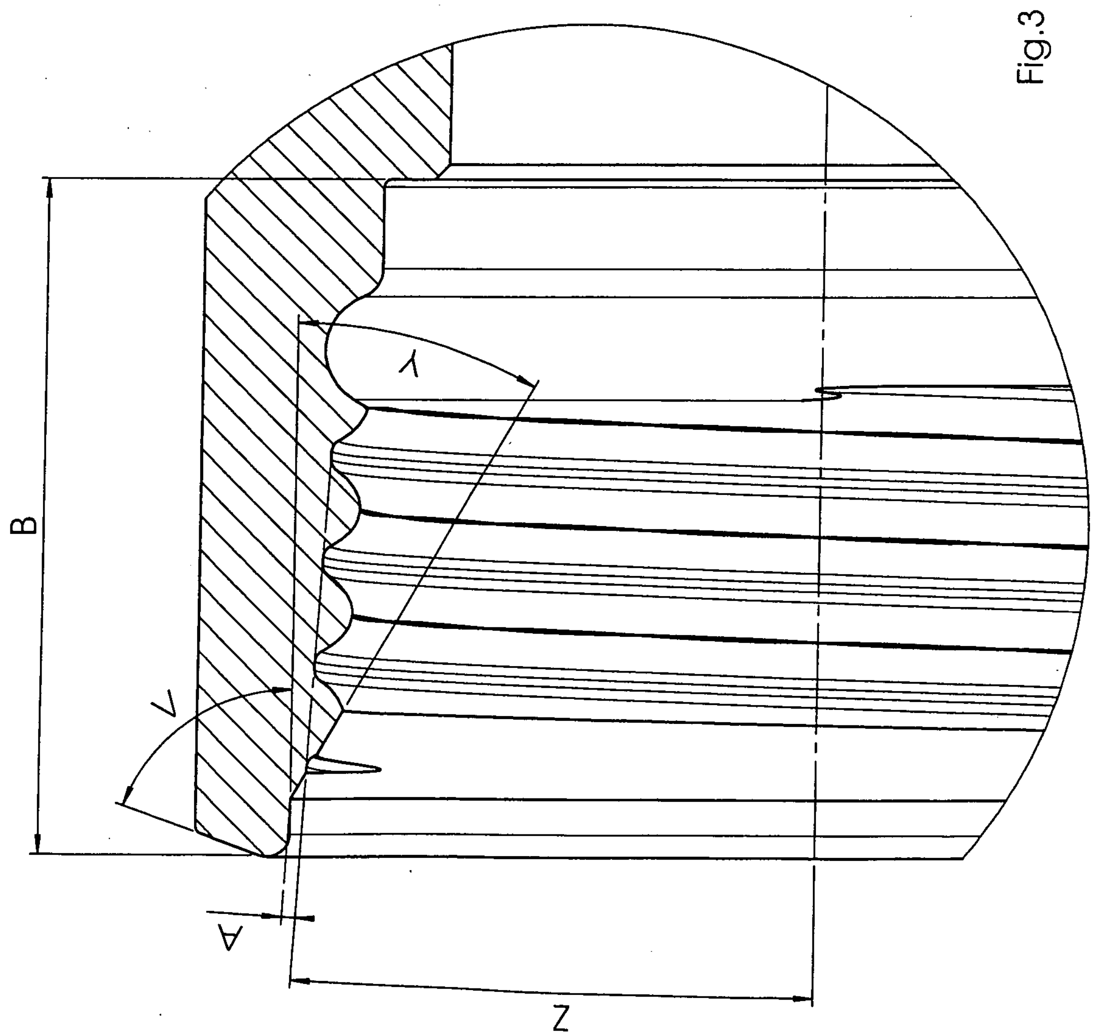


Fig.3

Zusammenbau

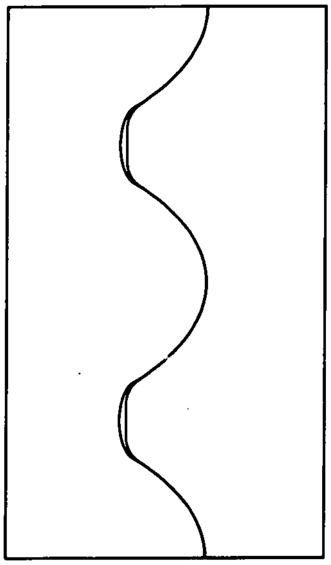

Fig.7

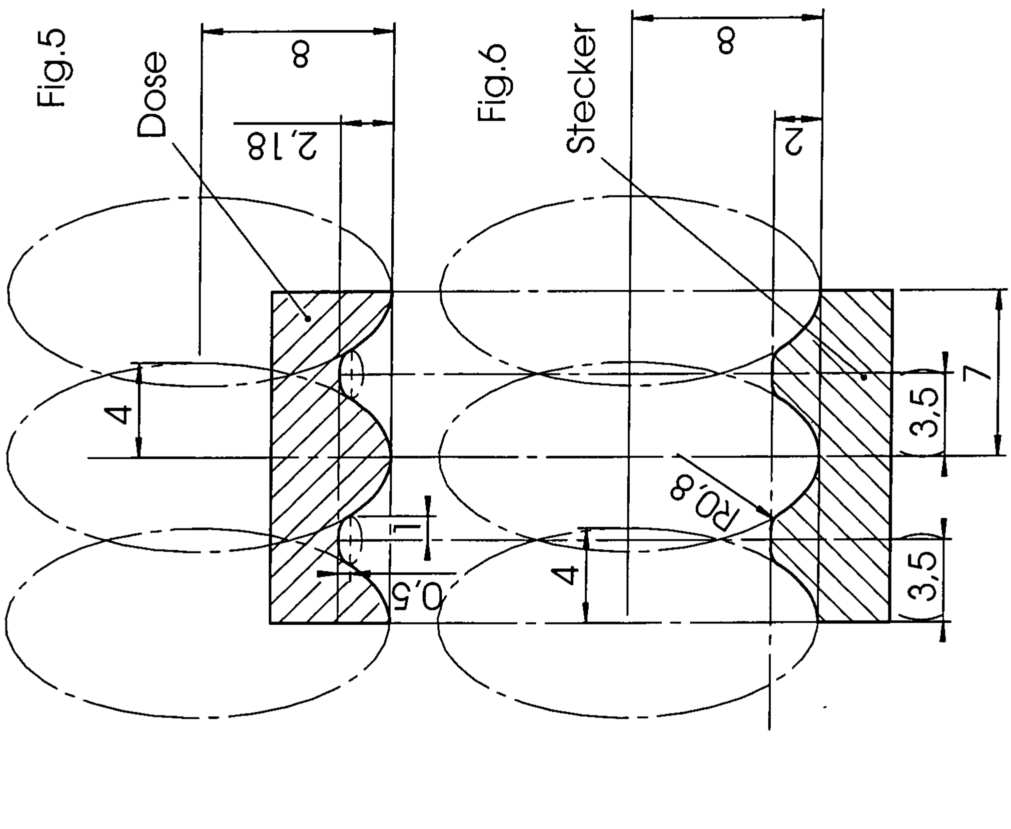


Fig.5

Fig.6

Fig.8

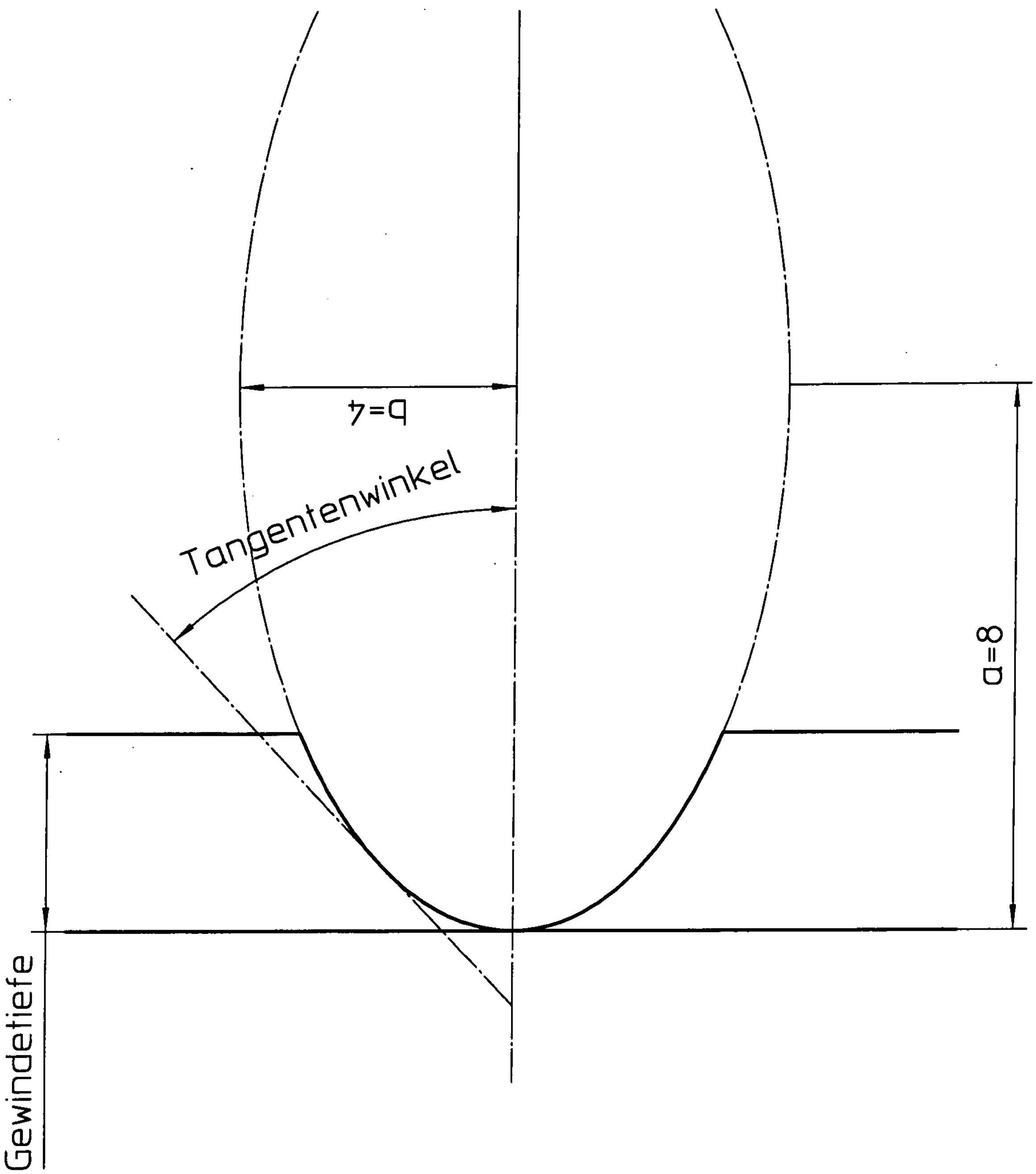

Fig.9

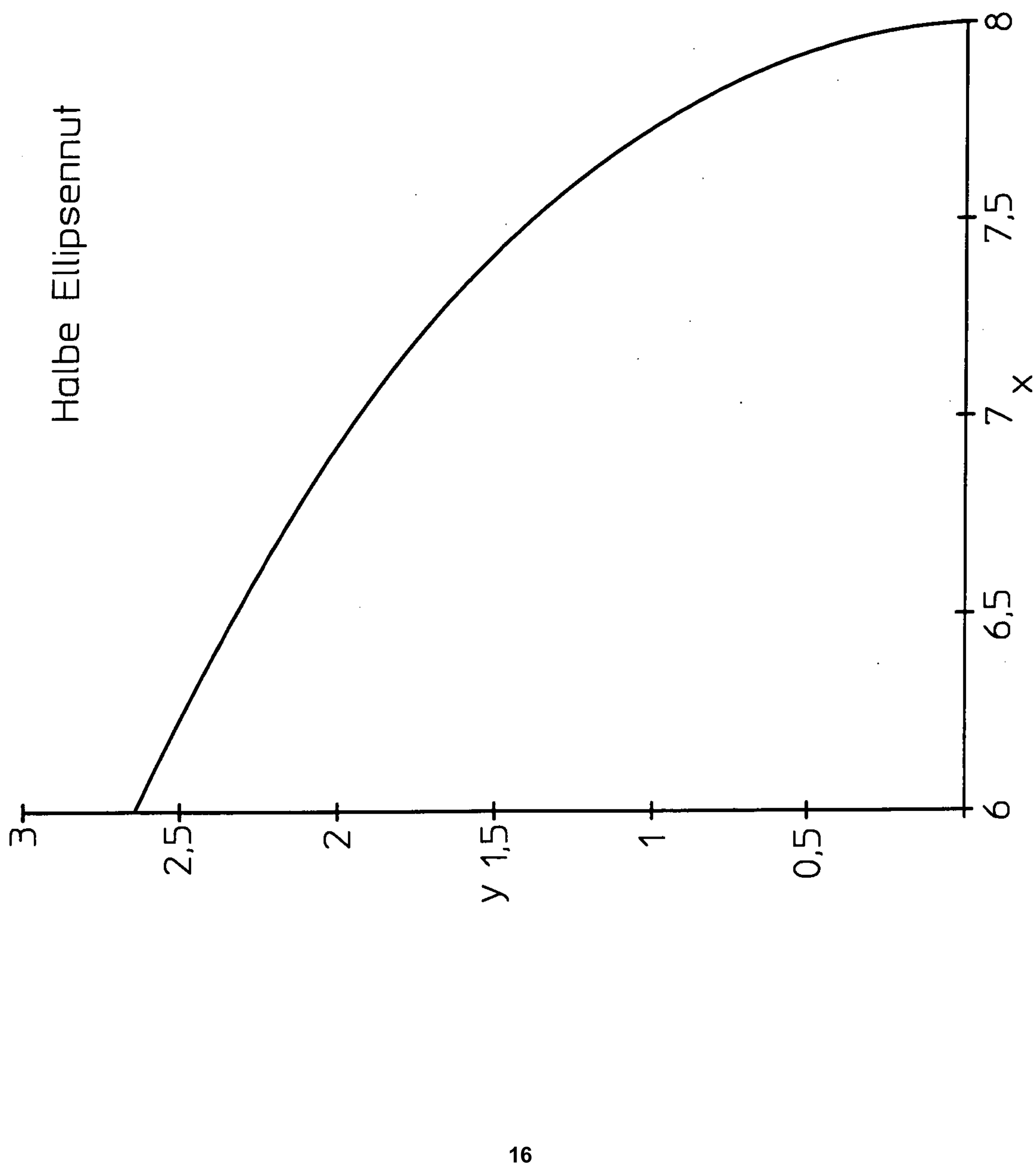

Fig.10

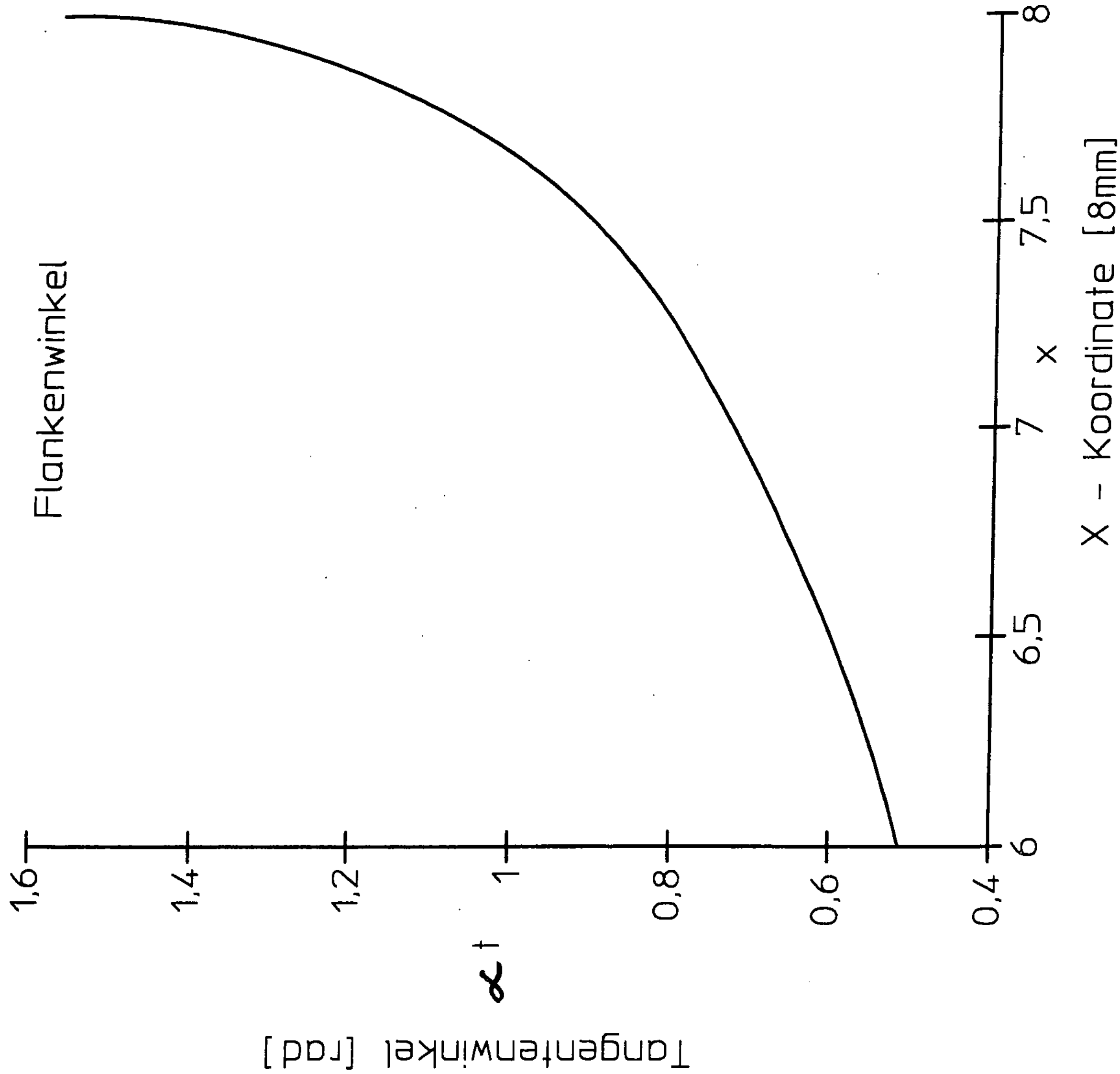
Flankenwinkel
Tangentenwinkel [rad]
α t
1,6
1,4
1,2
1
0,8
0,6
0,4
6
6,5
7
7,5
8
X - Koordinate [8mm]
x

Fig.11

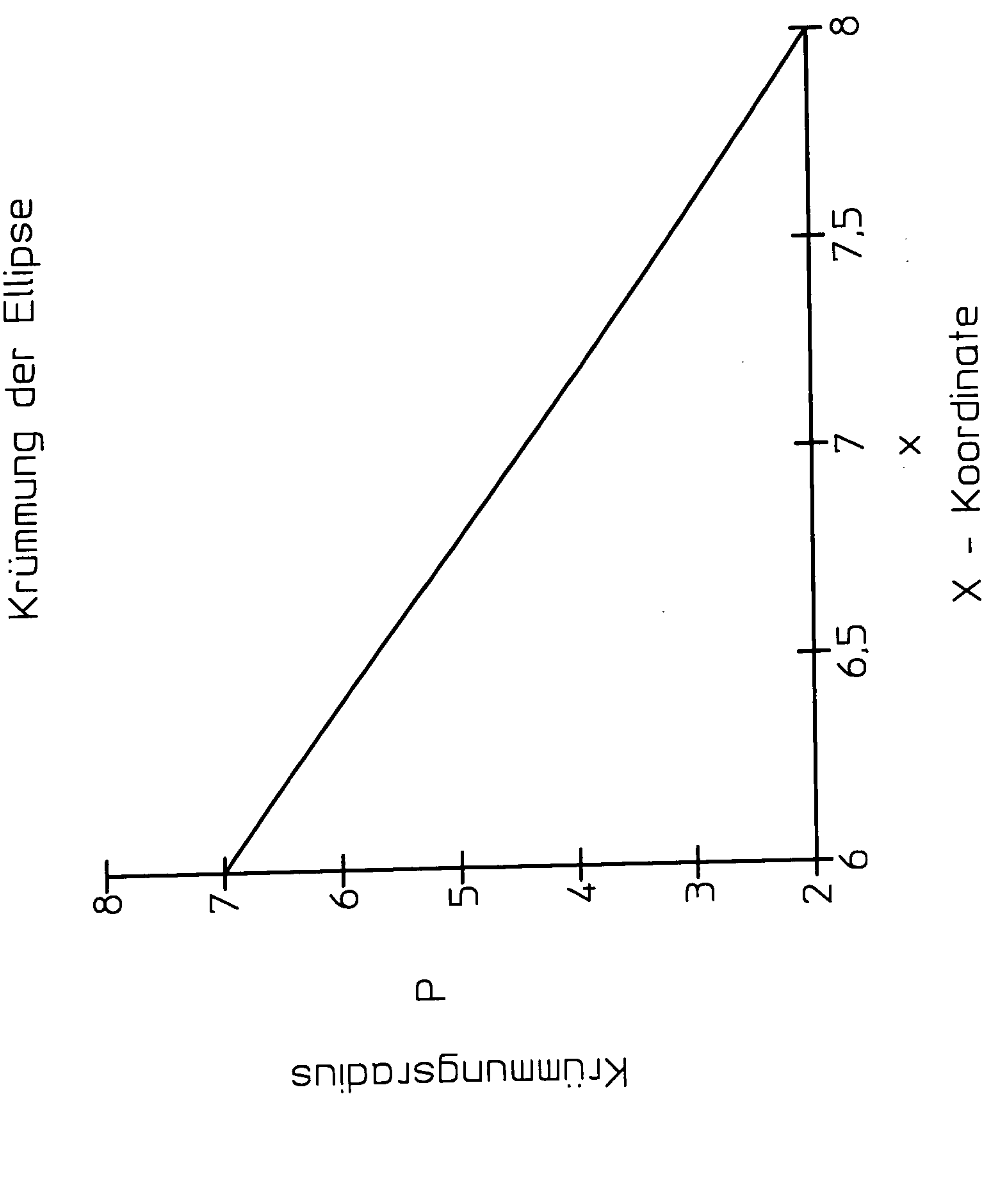
Krümmung der Ellipse
Krümmungsradius
P
8
7
6
5
4
3
2
6
6,5
7
7,5
8
x
X - Koordinate

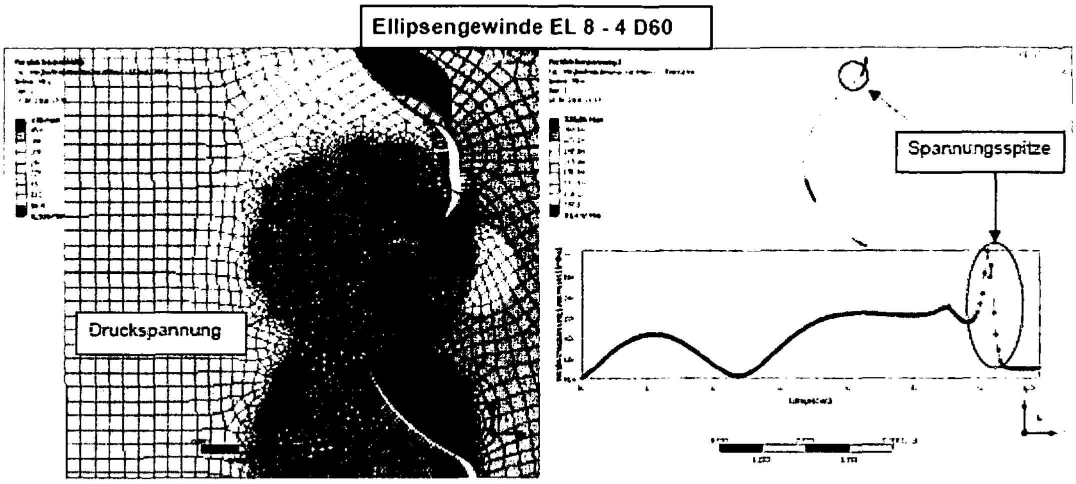


Fig. 12a

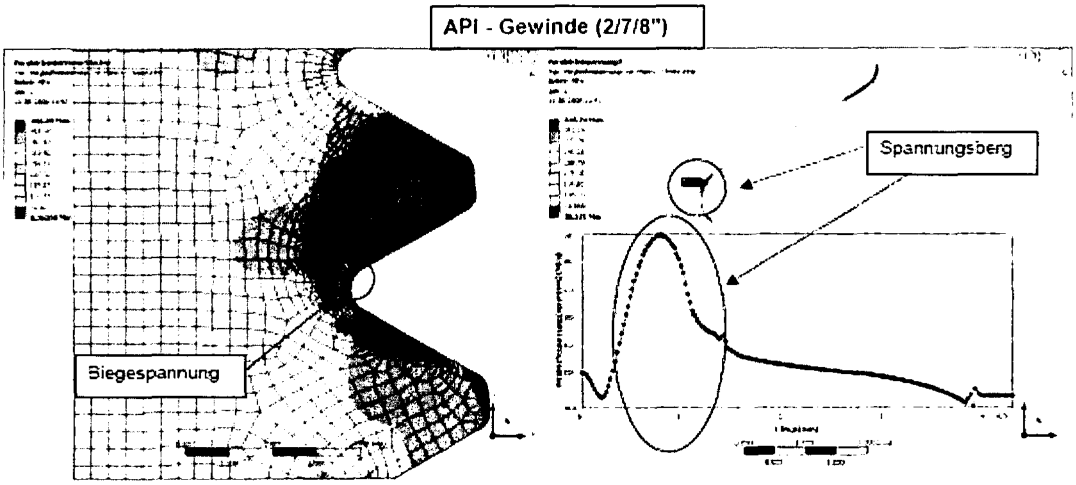


Fig. 12b

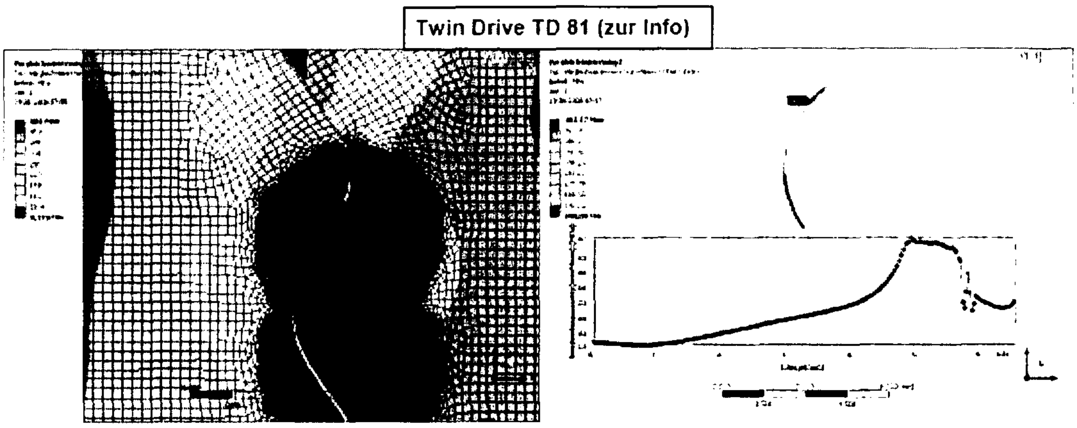


Fig. 12c

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19608980
- DE 19803304 A1
- EP 0324442 B1
- US 5060740 A
- WO 2006092649 A1